# FASCICULE DE BREVET EUROPEEN

(11) **EP 0 565 438 B1**
(45) Date de publication et mention de la délivrance du brevet: **24.07.1996**
(21) Numéro de dépôt: 93400896.2
(22) Date de dépôt: 06.04.1993
(51) Int. Cl.: B60Q 1/30

(54) **Feu de signalisation monté sur une plage arrière de véhicule automobile**
Auf die Hutablage eines Fahrzeugs montierte Signalleuchte
Signal light mounted on the rear window platform of a vehicle

(30) Priorité: 08.04.1992 FR 9204293
(43) Date de publication de la demande: 13.10.1993
(73) Titulaire: VALEO VISION, 93000 Bobigny (FR)
(72) Inventeur: Rives, Claude, F-27930 Evreux (FR)
(74) Mandataire: Schrimpf, Robert

(56) Documents cités:
- DE-U- 9 114 246
- FR-A- 2 583 854
- US-A- 4 654 757
- US-A- 4 777 569
- US-A- 4 945 456

## Description

La présente invention concerne un feu de signalisation monté sur une plage arrière de véhicule automobile.

Actuellement on connaît de la technique antérieure, un feu de signalisation, notamment un feu stop, monté sur une plage arrière de véhicule automobile comprenant un boîtier contenant une lampe à filament. Ce boîtier est fermé du côté de la lunette arrière par une glace translucide à travers laquelle le faisceau de signalisation est émis et est recouvert par un capot extérieur s'étendant autour du boîtier entre la plage arrière et la lunette arrière. Le feu et le capot extérieur, sont fixés sur la plage arrière du véhicule.

DE-U-9 114 246 décrit un feu de signalisation du type mentionné ci-dessus, dans lequel le réflecteur est fixé pivotant pour permettre le changement de la lampe à filament. Ce document défini le préambule de la revendication 1.

Parce que la forme du réflecteur doit satisfaire aux exigences d'une haute intensité de lumière, le réflecteur peut avantageusement être réalisé en plastique moulé. Cependant, la résistance des plastiques aux températures élevées, n'est souvent pas suffisante, le réflecteur peut s'échauffer localement.

C'est un but de la présente invention que d'amener une grande liberté de forme du réflecteur, combinée avec une bonne résistance aux températures élevées.

Ce but est atteint grâce aux caractéristiques de la revendication 1.

Ainsi, le feu de signalisation selon l'invention permet de changer facilement la lampe montée à l'intérieur du boîtier. Il suffit de démonter le capot extérieur recouvrant ledit boitier et d'enlever la partie amovible pour pouvoir avoir accès à ladite lampe.

Suivant un mode de réalisation du feu de signalisation selon l'invention, la partie amovible présente en section transversale sensiblement une forme de U. Cette partie amovible épouse la forme générale du boîtier.

D'autre part, selon l'invention la partie amovible comporte au moins une attache sur sa partie supérieure située au-dessus de la lampe, cette attache venant coopérer avec une partie adjacente du boîtier.

La description qui va suivre en regard des dessins annexés donnés à titre d'exemples non limitatifs, permet de comprendre en quoi consiste l'invention et comment elle peut être réalisée.
- La figure 1 est une vue de face du feu de signalisation selon l'invention.
- La figure 2 est une vue en coupe selon le plan AA du feu de signalisation de la figure 1.
- La figure 3 est une vue en coupe selon le plan DD du feu de signalisation de la figure 1.
- La figure 4 est une vue en perspective de la partie amovible du boîtier du feu de signalisation de la figure 1.
- La figure 5 est une vue de dessus de la partie amovible de la figure 4.

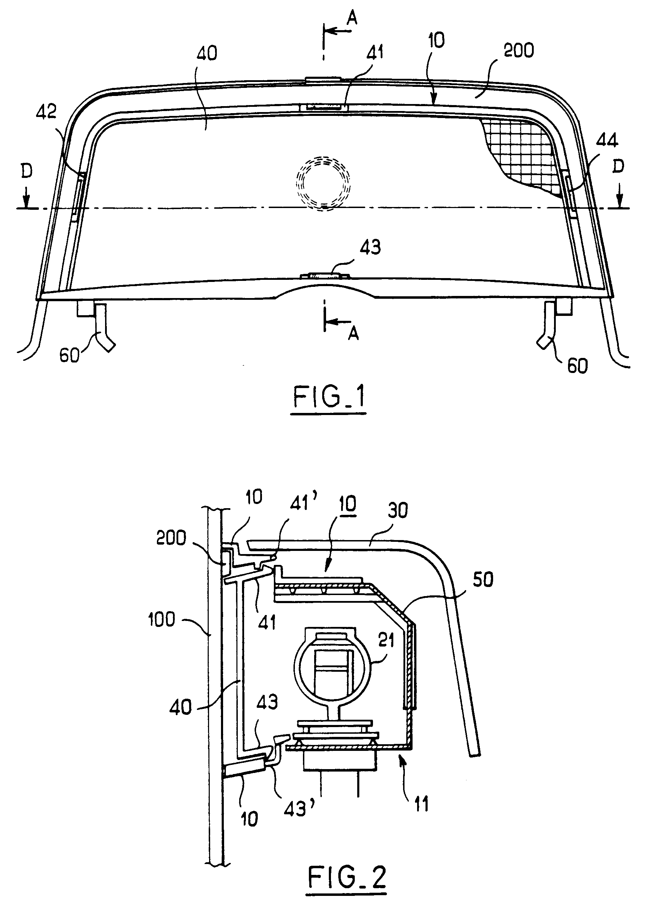

En référence tout d'abord aux figures 1, 2 et 3, on a représenté un feu de signalisation selon l'invention. Ce feu de signalisation, destiné à être monté sur une plage arrière de véhicule automobile, comprend un boîtier 10 ouvert du côté de la lunette arrière 100 du véhicule et contenant une lampe à filament 20 montée dans une douille 21 fixée sur un côté latéral intérieur 11 dudit boîtier 10, ladite lampe s'étendant transversalement vers l'intérieur dudit boîtier 10. Le boîtier 10 est fixé par sa base à l'aide d'attaches 60,sur la plage arrière non représentée du véhicule. En outre, le feu de signalisation est recouvert par un capot extérieur 30. Ledit boîtier 10 est fermé du côté de la lunette arrière 100 par une glace de fermeture 40. Cette glace de fermeture 40 comporte sur ses bords extérieurs quatre dents d'accrochage 41,42,43,44 qui viennent se clipser sur les bords adjacents du boîtier 10, ces bords adjacents comportant des plats 41',42',43',44' coopérant avec lesdites dents d'accrochage.
Par ailleurs, comme on peut le voir sur les figures 1, 2 et 3, le capot extérieur 30 se raccorde au niveau de ses bords latéraux et de son bord supérieur, sur les bords adjacents du boîtier 10, et est fixé par son bord inférieur sur la plage arrière non représentée du véhicule. De plus, les bords extérieurs latéraux et supérieurs dudit boîtier 10 et de la glace de fermeture 40, s'appuient sur un joint d'étanchéité 200 plaqué contre la lunette arrière 100 du véhicule automobile.

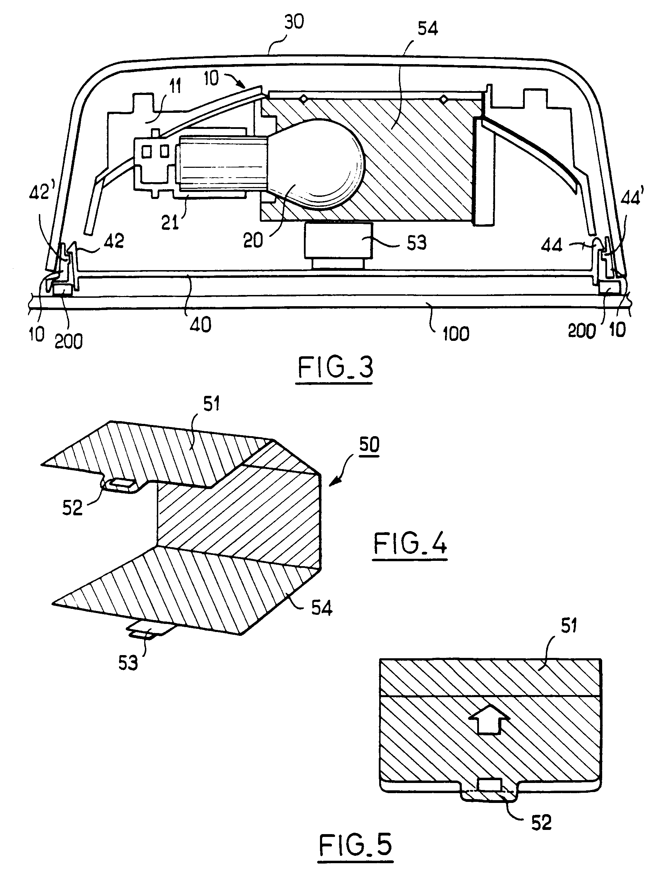

Comme le montrent mieux les figures 2 et 3, le boîtier 10 comporte une partie amovible 50 entre la lampe à filament 20 et le capot extérieur 30. En effet, alors que le capot extérieur 30 et le boîtier 10 sont réalisés le plus souvent en plastique moulé, la partie amovible est réalisée en métal, ce qui permet notamment de diffuser la chaleur produite par la lampe 20 en éclairement, et de maintenir le capot extérieur à une température raisonnablement basse. Ladite partie amovible 50, peut en outre être polie ou revêtue d'une couche plus ou moins réfléchissante de la lumière. De ce fait, ladite partie amovible forme également un récupérateur d'au moins une partie du flux lumineux émis vers elle par la lampe à filament 20, pour le réfléchir en direction de la lunette arrière 100. Cette partie amovible 50 constitue, en outre, une trappe d'accès à la lampe 20.

Comme le montrent les figures 2 et 4, ladite partie amovible 50 présente une section transversale sensiblement en forme de U.

D'autre part, comme le montrent mieux les figures 4 et 5, la partie amovible 50 comporte deux attaches 52,53 de fixation situées respectivement sur ses parties supérieure 51 et inférieure 54 placées au-dessus et en dessous de la lampe à filament 20. Ces deux attaches 52,53 viennent se clipser sur des dents prévues sur des parties adjacentes dudit boîtier 10 et par un mouvement de poussée initiale puis de traction, on déverrouille lesdites attaches 52,53 pour ensuite faire glisser la partie 50, vers la droite sur la figure 2. On peut alors accéder à la lampe 20. Le verrouillage de la partie amovible 50 s'effectue par le mouvement inverse, avec clipsage en fin de course.

## Revendications

1. Feu de signalisation destiné à être monté sur une plage arrière de véhicule automobile, et à être recouvert par un capot (30) ou analogue, comprenant un boitier (10) ouvert du côté de la lunette arrière du véhicule et contenant une lampe à filament (20) s'étendant à partir d'un côté (11) dudit boitier (10) vers l'intérieur dudit boîtier, ce boitier formant un écran pour la lumière et la chaleur émise par la lampe entre la lampe à filament (20) et le capot (30), le boitier (10) étant fermé du côté de la lunette arrière du véhicule par une glace de fermeture (40), feu de signalisation caractérisé en ce que ledit boîtier (10) comporte une partie amovible (50) réaliséé en métal et présentant en section transversale sensiblement une forme de U, la partie amovible (50) constituant une trappe d'accès à la lampe.

2. Feu de signalisation selon la revendication 1, caractérisé en ce que ladite partie amovible (50) comporte au moins une attache (52) sur sa partie supérieure (51) située au-dessus de la lampe, cette attache (52) venant coopérer avec une partie adjacente du boîtier (10).

3. Feu de signalisation selon l'une des revendications 1 ou 2, caractérisé en ce que la partie amovible (50) forme un récupérateur d'au moins une partie de flux lumineux émis vers elle par la lampe à filament (20).

4. Feu de signalisation selon l'une des revendications 1 à 3, caractérisé en ce que la partie amovible (50) forme un moyen de diffusion de la chaleur émise vers elle par la lampe à filament (20).

## Claims

1. A signalling light for mounting on a back shelf of a motor vehicle, and for being covered by a cap (30) or the like, the light comprising a box (10) that is open towards the back window of the vehicle and that contains a filament bulb (20) that extends from one side (11) of said box (10) into said box, said box extending between the filament bulb (20) and the cap (30) and forming a screen for the light and heat emitted by the lamp, the box (10) being closed adjacent to the back window of the vehicle by a closure glass (40), the signalling light being characterized in that said box (10) includes a removable portion (50) made of metal and has a cross-section that is substantially U-shaped, the removable portion (50) constituting an access hatch giving access to the bulb.

2. A signalling light according to claim 1, characterized in that said removable portion (50) includes at least one tab (52) on its top portion (51) situated above the bulb, said tab (52) co-operating with an adjacent portion of the box (10).

3. A signalling light according to claim 1 or 2, characterized in that the removable portion (50) forms a reflector for at least a fraction of the light flux emitted towards it from the filament bulb (20).

4. A signalling light according to any one of claims 1 to 3, characterized in that the removable portion (50) forms means for diffusing the heat emitted towards it by the filament bulb (20).

## Patentansprüche

1. Signalleuchte, die auf die Hutablage eines Kraftfahrzeugs zu montieren und durch eine Abdeckung (30) oder ähnliches zu umschließen ist, mit einem Gehäuse (10), das auf der Seite der Heckscheibe des Fahrzeugs offen ist und eine Glühfadenlampe (20) enthält, die sich von einer Seite (11) des besagten Gehäuses (10) aus zum Innern des besagten Gehäuses erstreckt, wobei dieses Gehäuse eine Blende für das Licht und die Wärme, die durch die Lampe abgestrahlt werden, zwischen der Glühfadenlampe (20) und der Abdeckung (30) bildet, wobei das Gehäuse (10) auf der Seite der Heckscheibe des Fahrzeugs durch eine Streuscheibe (40) abgeschlossen ist, **dadurch gekennzeichnet,** daß das besagte Gehäuse (10) einen abnehmbaren Teil (50) umfaßt, der aus Metall ausgeführt ist und einen in etwa U-förmigen Querschnitt aufweist, wobei der abnehmbare Teil (50) eine Zugangsklappe zur Lampe bildet.

2. Signalleuchte nach Anspruch 1, **dadurch gekennzeichnet,** daß der besagte abnehmbare Teil (50) wenigstens eine Halterung (52) an seiner Oberseite (51) oberhalb der Lampe umfaßt, wobei diese Halterung (52) mit einem angrenzenden Teil des Gehäuses (10) zusammenwirkt.

3. Signalleuchte nach einem der Ansprüche 1 und 2, **dadurch gekennzeichnet,** daß der abnehmbare Teil (50) eine Auffangvorrichtung für wenigstens einen Teil des Lichtstroms bildet, der durch die Glühfadenlampe (20) in seine Richtung abgestrahlt wird.

4. Signalleuchte nach einem der Ansprüche 1 bis 3, **dadurch gekennzeichnet,** daß der abnehmbare Teil (50) ein Mittel zur Ableitung der Wärme bildet, die durch die Glühfadenlampe (20) in seine Richtung abgestrahlt wird.
